# EUROPEAN PATENT APPLICATION

(11) **EP 2 284 561 A1**
(43) Date of publication of application: **16.02.2011**
(21) Application number: 10007104.2
(22) Date of filing: 09.07.2010
(51) Int. Cl.: G01S 1/00, G01S 19/36, H01Q 3/24, H01Q 21/06

(54) **Method and system for antenna diversity with global navigation satellite systems (GNSS)**

(30) Priority: 22.07.2009 US 227654 P; 31.08.2009 US 551235
(71) Applicant: Broadcom Corporation, Irvine, CA 92617 (US)
(72) Inventor: Walley, John, Ladera Ranch, CA 92694 (US); Abraham, Charles, Los Gatos, CA 95033 (US)
(74) Representative: Jehle, Volker Armin

(57) **Abstract**

A wireless device including one or more receivers may selectively couple one or more antennas to one or more receivers based on a directionality of the antennas and an orientation of the antennas with respect to sources of the received wireless signals, which may include global navigation satellite system (GNSS) signals. The orientation may be determined utilizing orientation sensors integrated in the wireless device, and may include a MEMS sensor and/or a magnetic compass. The antennas may be selectively coupled to the receivers based on a location of the wireless sources and the orientation of the directionality with respect to sources of the received wireless signals. A received signal strength indicator (RSSI) may be measured for each configuration. The antennas may be coupled sequentially to the receivers to determine a maximum of the RSSI. The antennas may include patch antennas and/or dipole antennas.

## Description

### CROSS-REFERENCE TO RELATED APPLICATIONS/INCORPORATION BY REFERENCE

This application makes reference to and claims priority to United States Provisional Application Serial No. 61/227,654 filed on July 22, 2009.

The above stated application is hereby incorporated herein by reference in its entirety.

### FEDERALLY SPONSORED RESEARCH OR DEVELOPMENT

[Not Applicable]

### [MICROFICHE/COPYRIGHT REFERENCE]

[Not Applicable]

### FIELD OF THE INVENTION

Certain embodiments of the invention relate to wireless communication. More specifically, certain embodiments of the invention relate to a method and system for antenna diversity with global navigation satellite systems (GNSS).

### BACKGROUND OF THE INVENTION

Mobile communications have changed the way people communicate and mobile phones have been transformed from a luxury item to an essential part of every day life. The use of mobile phones is today dictated by social situations, rather than hampered by location or technology. While voice connections fulfill the basic need to communicate, and mobile voice connections continue to filter even further into the fabric of every day life, the mobile Internet is the next step in the mobile communication revolution. The mobile Internet is poised to become a common source of everyday information, and easy, versatile mobile access to this data will be taken for granted.

As the number of electronic devices enabled for wireline and/or mobile communications continues to increase, significant efforts exist with regard to making such devices more power efficient. For example, a large percentage of communications devices are mobile wireless devices and thus often operate on battery power. Additionally, transmit and/or receive circuitry within such mobile wireless devices often account for a significant portion of the power consumed within these devices. Moreover, in some conventional communication systems, transmitters and/or receivers are often power inefficient in comparison to other blocks of the portable communication devices. Accordingly, these transmitters and/or receivers have a significant impact on battery life for these mobile wireless devices.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for antenna diversity with antenna diversity with global navigation satellite systems (GNSS), substantially as shown in and/or described in connection with at least one of the figures, as set forth more completely in the claims.

According to an aspect, a method for enabling wireless communication comprises:
performing by one or more processors and/or circuits in a wireless communication device, said one or more processors and/or circuits comprising one or more receivers:
   selectively coupling one or more of a plurality of antennas in said wireless communication device to said one or more receivers based on a directionality of each of said plurality of antennas and an orientation of each of said plurality of antennas with respect to one or more sources of said received wireless signals.

Advantageously, said wireless signals comprise global navigation satellite system (GNSS) signals.

Advantageously, the method further comprises determining said orientation utilizing one or more orientation sensors integrated in said wireless device.

Advantageously, said one or more orientation sensors comprise a MEMS sensor.

Advantageously, said one or more orientation sensors comprise an electromagnetic or magnetic sensor.

Advantageously, the method further comprises selectively coupling said one or more of said plurality of antennas to said one or more receivers based on a location of said wireless sources and said orientation with respect to said one or more sources of said received wireless signals.

Advantageously, the method further comprises measuring an RSSI for each selectively coupled configuration of said one or more of said plurality of antennas.

Advantageously, the method further comprises selectively coupling said one or more of said plurality of antennas sequentially to said one or more receivers to determine which of said selectively coupled one or more of said plurality of antennas provides a maximum RSSI.

Advantageously, said one or more of said plurality of antennas comprise patch antennas.

Advantageously, said one or more of said plurality of antennas comprise dipole antennas.

Advantageously, the method further comprises reducing a number of assessed selectively coupled antenna configurations utilizing a known location of said wireless device and a constellation of signal sources determined based on said location.

Advantageously, the method further comprises determining an orientation of said wireless device utilizing said known location and measuring signal strengths from said determined constellation of signal sources.

According to an aspect, a system for enabling wireless communication comprises:
one or more processors and/or circuits for use in a wireless communication device, wherein said one or more processors and/or circuits comprise one or more receivers, and said one or more processors and/or circuits are operable to:
   selectively couple one or more of a plurality of antennas in said wireless communication device to said one or more receivers based on a directionality of each of said plurality of antennas and an orientation each of said plurality of antennas with respect to one or more sources of said received wireless signals.

Advantageously, said wireless signals comprise global navigation satellite system (GNSS) signals.

Advantageously, said one or more circuits in said wireless device are operable to determine said orientation utilizing one or more orientation sensors integrated in said wireless device.

Advantageously, said one or more orientation sensors comprise a MEMS sensor.

Advantageously, said one or more orientation sensors comprise an electromagnetic or magnetic sensor.

Advantageously, said one or more circuits in said wireless device are operable to selectively couple said one or more of said plurality of antennas to said one or more receivers based on a location of said wireless sources and said orientation with respect to said one or more sources of said received wireless signals.

Advantageously, said one or more circuits in said wireless device are operable to measure an RSSI for each selectively coupled configuration of said one or more of said plurality of antennas.

Advantageously, said one or more circuits in said wireless device are operable to selectively couple said one or more of said plurality of antennas sequentially to said one or more receivers to determine which of said selectively coupled one or more of said plurality of antennas provides a maximum RSSI.

Advantageously, said one or more of said plurality of antennas comprise patch antennas.

Advantageously, said one or more of said plurality of antennas comprise dipole antennas.

Advantageously, said one or more circuits in said wireless device are operable to reduce a number of assessed selectively coupled antenna configurations utilizing a known location of said wireless device and a constellation of signal sources determined based on said location.

Advantageously, said one or more circuits in said wireless device are operable to determine an orientation of said wireless device utilizing said known location and measuring signal strengths from said determined constellation of signal sources.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary wireless system, which may be utilized in accordance with an embodiment of the invention.

FIG. 1B is a block diagram illustrating exemplary directional GNSS signal reception, in accordance with an embodiment of the invention.

FIG. 2 is a diagram showing a top view of an exemplary multiple-antenna configuration assessment, in accordance with an embodiment of the invention.

FIG. 3 is a diagram illustrating exemplary directional patch antennas, in accordance with an embodiment of the invention.

FIG. 4 is a block diagram illustrating exemplary steps for orientation-based antenna configuration, in accordance with an embodiment of the invention.

### DETAILED DESCRIPTION OF THE INVENTION

Certain aspects of the invention may be found in a method and system for antenna diversity with global navigation satellite systems (GNSS). In various exemplary aspects of the invention, a wireless device comprising one or more transmitters, one or more receivers, and a plurality of antennas, may selectively couple one or more of the plurality of antennas to the one or more receivers based on a directionality of each of the plurality of antennas and on an orientation of the directionality with respect to sources of the received wireless signals. The wireless signals may comprise GNSS signals. The orientation of the directionality may be determined utilizing one or more orientation sensors integrated in the wireless device. The orientation sensor may comprise a MEMS sensor and/or a magnetic compass. One or more of the plurality of antennas may be selectively coupled to the one or more receivers based on a location of the wireless sources and the orientation of the directionality with respect to sources of the received wireless signals. A received signals strength indication (RSSI) may be measured for each selectively coupled configuration of the one or more of the plurality of antennas. One or more of the plurality of antennas may be coupled sequentially to the one or more receivers to determine a maximum of the RSSI. The plurality of antennas comprises patch antennas and/or dipole antennas.

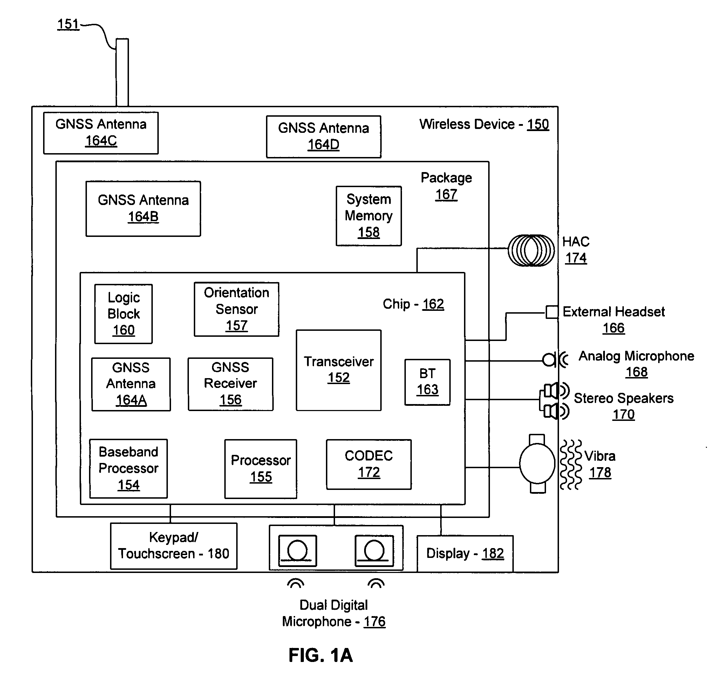

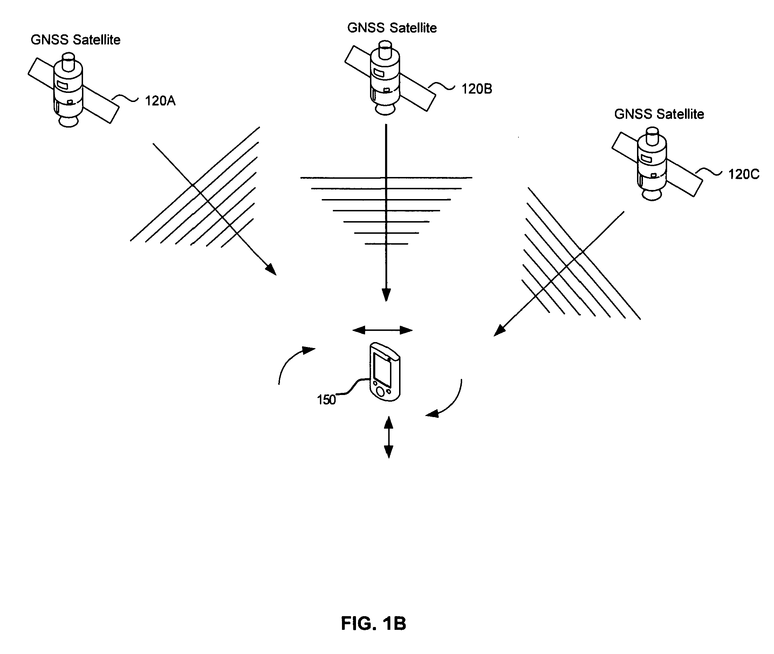

FIG. 1 is a block diagram of an exemplary wireless system, which may be utilized in accordance with an embodiment of the invention. Referring to FIG. 1, the wireless device 150 may comprise an antenna 151, a chip 162, a transceiver 152, a baseband processor 154, a processor 155, a GNSS receiver 156, an orientation sensor 157, a system memory 158, a logic block 160, GNSS antennas 164A-164D, an external headset port 166, and a package 167. The wireless device 150 may also comprise an analog microphone 168, integrated hands-free (IHF) stereo speakers 170, a hearing aid compatible (HAC) coil 174, a dual digital microphone 176, a vibration transducer 178, a keypad and/or touchscreen 180, and a display 182.

The transceiver 152 may comprise suitable logic, circuitry, interfaces, and/or code that may be enabled to modulate and upconvert baseband signals to RF signals for transmission by one or more antennas, which may be represented generically by the antenna 151. The transceiver 152 may also be enabled to downconvert and demodulate received RF signals to baseband signals. The RF signals may be received by one or more antennas, which may be represented generically by the antenna 151. Different wireless systems may use different antennas for transmission and reception. The transceiver 152 may be enabled to execute other functions, for example, filtering the baseband and/or RF signals, and/or amplifying the baseband and/or RF signals. Although a single transceiver on each chip is shown, the invention is not so limited. Accordingly, the transceiver 152 may be implemented as a separate transmitter and a separate receiver. In addition, there may be a plurality of transceivers, transmitters and/or receivers. In this regard, the plurality of transceivers, transmitters and/or receivers may enable the wireless device 150 to handle a plurality of wireless protocols and/or standards including cellular, WLAN and PAN. Wireless technologies handled by the wireless device 150 may comprise GPS, GALILEO, GLONASS, GSM, CDMA, CDMA2000, WCDMA, GNSS, GMS, GPRS, EDGE, WIMAX, WLAN, LTE, 3GPP, UMTS, BLUETOOTH, and ZIGBEE, for example.

The baseband processor 154 may comprise suitable logic, circuitry, interfaces, and/or code that may be enabled to process baseband signals for transmission via the transceiver 152 and/or the baseband signals received from the transceiver 152. The processor 155 may be any suitable processor or controller such as a CPU, DSP, ARM, or any type of integrated circuit processor. The processor 155 may comprise suitable logic, circuitry, and/or code that may be enabled to control the operations of the transceiver 152 and/or the baseband processor 154. For example, the processor 155 may be utilized to update and/or modify programmable parameters and/or values in a plurality of components, devices, and/or processing elements in the transceiver 152 and/or the baseband processor 154. At least a portion of the programmable parameters may be stored in the system memory 158.

Control and/or data information, which may comprise the programmable parameters, may be transferred from other portions of the wireless device 150, not shown in FIG. 1, to the processor 155. Similarly, the processor 155 may be enabled to transfer control and/or data information, which may include the programmable parameters, to other portions of the wireless device 150, not shown in FIG. 1, which may be part of the wireless device 150.

The processor 155 may utilize the received control and/or data information, which may comprise the programmable parameters, to determine an operating mode of the transceiver 152. For example, the processor 155 may be utilized to select a specific frequency for a local oscillator, a specific gain for a variable gain amplifier, configure the local oscillator and/or configure the variable gain amplifier for operation in accordance with various embodiments of the invention. Moreover, the specific frequency selected and/or parameters needed to calculate the specific frequency, and/or the specific gain value and/or the parameters, which may be utilized to calculate the specific gain, may be stored in the system memory 158 via the processor 155, for example. The information stored in system memory 158 may be transferred to the transceiver 152 from the system memory 158 via the processor 155.

The orientation sensor 157 may comprise suitable circuitry, logic, interfaces, and/or code that may be operable to sense the orientation of the wireless device 150. For example, the orientation sensor 157 may comprise a micro-electromechanical system (MEMS) sensor, such as a compass sensor, for example, that may sense orientation and/or movement of the wireless device 150. In another embodiment of the invention, the orientation sensor 157 may comprise a magnetic field sensor that may enable sensing the orientation of the wireless device 150 with respect to the Earth's magnetic field, for example. In this manner, the wireless device 150 may be able to determine which direction it is facing and what antenna or antennas may be utilized to result in the maximum received GNSS signal.

The system memory 158 may comprise suitable logic, circuitry, interfaces, and/or code that may be enabled to store a plurality of control and/or data information, including parameters needed to calculate frequencies and/or gain, and/or the frequency value and/or gain value. The system memory 158 may store at least a portion of the programmable parameters that may be manipulated by the processor 155.

The logic block 160 may comprise suitable logic, circuitry, interfaces, and/or code that may enable controlling of various functionalities of the wireless device 150. For example, the logic block 160 may comprise one or more state machines that may generate signals to control the transceiver 152 and/or the baseband processor 154. The logic block 160 may also comprise registers that may hold data for controlling, for example, the transceiver 152 and/or the baseband processor 154. The logic block 160 may also generate and/or store status information that may be read by, for example, the processor 155. Amplifier gains and/or filtering characteristics, for example, may be controlled by the logic block 160.

The BT radio/processor 163 may comprise suitable circuitry, logic, interfaces, and/or code that may enable transmission and reception of Bluetooth signals. The BT radio/processor 163 may enable processing and/or handling of BT baseband signals. In this regard, the BT radio/processor 163 may process or handle BT signals received and/or BT signals transmitted via a wireless communication medium. The BT radio/processor 163 may also provide control and/or feedback information to/from the baseband processor 154 and/or the processor 155, based on information from the processed BT signals. The BT radio/processor 163 may communicate information and/or data from the processed BT signals to the processor 155 and/or to the system memory 158. Moreover, the BT radio/processor 163 may receive information from the processor 155 and/or the system memory 158, which may be processed and transmitted via the wireless communication medium a Bluetooth headset, for example

The CODEC 172 may comprise suitable circuitry, logic, interfaces, and/or code that may process audio signals received from and/or communicated to input/output devices. The input devices may be within or communicatively coupled to the wireless device 150, and may comprise the analog microphone 168, the stereo speakers 170, the hearing aid compatible (HAC) coil 174, the dual digital microphone 176, and the vibration transducer 178, for example. The CODEC 172 may be operable to up-convert and/or down-convert signal frequencies to desired frequencies for processing and/or transmission via an output device. The CODEC 172 may enable utilizing a plurality of digital audio inputs, such as 16 or 18-bit inputs, for example. The CODEC 172 may also enable utilizing a plurality of data sampling rate inputs. For example, the CODEC 172 may accept digital audio signals at sampling rates such as 8 kHz, 11.025 kHz, 12 kHz, 16 kHz, 22.05 kHz, 24 kHz, 32 kHz, 44.1 kHz, and/or 48 kHz. The CODEC 172 may also support mixing of a plurality of audio sources. For example, the CODEC 172 may support audio sources such as general audio, polyphonic ringer, I²S FM audio, vibration driving signals, and voice. In this regard, the general audio and polyphonic ringer sources may support the plurality of sampling rates that the audio CODEC 172 is enabled to accept, while the voice source may support a portion of the plurality of sampling rates, such as 8 kHz and 16 kHz, for example.

The CODEC 172 may utilize a programmable infinite impulse response (IIR) filter and/or a programmable finite impulse response (FIR) filter for at least a portion of the audio sources to compensate for passband amplitude and phase fluctuation for different output devices. In this regard, filter coefficients may be configured or programmed dynamically based on current operations. Moreover, the filter coefficients may be switched in one-shot or may be switched sequentially, for example. The CODEC 172 may also utilize a modulator, such as a Delta-Sigma (Δ-∑) modulator, for example, to code digital output signals for analog processing.

The chip 162 may comprise an integrated circuit with multiple functional blocks integrated within, such as the transceiver 152, the GNSS receiver 156, the baseband processor 154, the BT radio/processor 163, the GNSS antennas 164A-164D, and the CODEC 172. The number of functional blocks integrated in the chip 162 is not limited to the number shown in FIG. 1. Accordingly, any number of blocks may be integrated on the chip 162 depending on chip space and wireless device 150 requirements, for example.

The GNSS antennas 164A-164D may comprise metallic layers deposited on and/or integrated in the chip 162, or may be integrated on the package 167 or elsewhere within the wireless device 150, and may be operable to receive electromagnetic radiation from GNSS signal sources. The antennas may obtain a maximum received signal when placed in a particular orientation with respect to a signal source, depending on the geometry of the particular antenna being activated. The GNSS antennas 164A-164D may comprise patch and/or dipole antennas, for example, which may be operable to receive GNSS signals. In this manner, antennas in various locations in the wireless device 150 with different optimum directionality may be utilized to receive GNSS signals at an optimized signal strength. The number of GNSS antennas is not limited to the number shown in FIG. 1A. Accordingly, any number of GNSS antennas may be integrated in the wireless device 150 depending on space and cost limitations. Similarly, the GNSS antennas 164A-164D may be used for any type of wireless signal, and is not limited to GNSS, which is an exemplary embodiment.

The external headset port 166 may comprise a physical connection for an external headset to be communicatively coupled to the wireless device 150. The analog microphone 168 may comprise suitable circuitry, logic, and/or code that may detect sound waves and convert them to electrical signals via a piezoelectric effect, for example. The electrical signals generated by the analog microphone 168 may comprise analog signals that may require analog to digital conversion before processing.

The package 167 may comprise a printed circuit board or other support structure for the chip 162, GNSS antennas, and other components of the wireless device 150. The package 167 may comprise an insulating material, for example, and may provide isolation between electrical components mounted on the package 167. In another embodiment of the invention, the chip 162 and the other chips in the wireless device 150 may be integrated on a plurality of packages.

The stereo speakers 170 may comprise a pair of speakers that may be operable to generate audio signals from electrical signals received from the CODEC 172. The HAC coil 174 may comprise suitable circuitry, logic, and/or code that may enable communication between the wireless device 150 and a T-coil in a hearing aid, for example. In this manner, electrical audio signals may be communicated to a user that utilizes a hearing aid, without the need for generating sound signals via a speaker, such as the stereo speakers 170, and converting the generated sound signals back to electrical signals in a hearing aid, and subsequently back into amplified sound signals in the user's ear, for example.

The dual digital microphone 176 may comprise suitable circuitry, logic, and/or code that may be operable to detect sound waves and convert them to electrical signals. The electrical signals generated by the dual digital microphone 176 may comprise digital signals, and thus may not require analog to digital conversion prior to digital processing in the CODEC 172. The dual digital microphone 176 may enable beamforming capabilities, for example.

The vibration transducer 178 may comprise suitable circuitry, logic, and/or code that may enable notification of an incoming call, alerts and/or message to the wireless device 150 without the use of sound. The vibration transducer may generate vibrations that may be in synch with, for example, audio signals such as speech or music.

In operation, control and/or data information, which may comprise the programmable parameters, may be transferred from other portions of the wireless device 150, not shown in FIG. 1, to the processor 155. Similarly, the processor 155 may be enabled to transfer control and/or data information, which may include the programmable parameters, to other portions of the wireless device 150, not shown in FIG. 1, which may be part of the wireless device 150.

The processor 155 may utilize the received control and/or data information, which may comprise the programmable parameters, to determine an operating mode of the transceivers 152A and 152B. For example, the processor 155 may be utilized to select a specific frequency for a local oscillator, the optimum antenna or antennas for maximum received signals, a specific gain for a variable gain amplifier, configure the local oscillator and/or configure the variable gain amplifier for operation in accordance with various embodiments of the invention. Moreover, the specific frequency selected and/or parameters needed to calculate the specific frequency, and/or the specific gain value and/or the parameters, which may be utilized to calculate the specific gain, may be stored in the system memory 158 via the processor 155, for example. The information stored in system memory 158 may be transferred to the transceiver 152 from the system memory 158 via the processor 155.

The CODEC 172 in the wireless device 150 may communicate with the processor 155 in order to transfer audio data and control signals. Control registers for the CODEC 172 may reside within the processor 155. The processor 155 may exchange audio signals and control information via the system memory 158. The CODEC 172 may up-convert and/or down-convert the frequencies of multiple audio sources for processing at a desired sampling rate.

The signals processed by the processor 155 and/or the baseband processor 154 may be received from GNSS sources to enable location-based services (LBS) for in the wireless device 150. Antennas, such as the GNSS antennas 164A-164D may be selectively enabled to receive maximized GNSS signals, depending on the spatial orientation of the wireless device with respect to the signal source. For example, GNSS signals are received from above, so in instances where the wireless device 150 may be oriented in a direction that is not vertical, a GNSS antenna that is optimized to receive signals from the side of the wireless device that is facing upwards may be enabled to receive signals. The orientation of the wireless device 150 may be measured using the orientation sensor, which may be utilized to enable the appropriate antenna.

In another embodiment of the invention, the processor 155 may enable each of the GNSS antennas 164A-164D sequentially and the received signal strength indicator (RSSI) for each antenna may then be utilized to determine the optimum antenna to be enabled. The antennas may be assessed on a cyclical, random, and/or periodic basis, such that the antennas that are not being utilized with a high duty cycle, because they may have resulted in lower RSSI, may be reassessed on a periodic basis, as the orientation of the wireless device 150 with respect to the GNSS signal source may change over time. In another embodiment of the invention, the reassessment of the signal strengths from various configurations may be based on past history of received signals of the wireless device 150 in previous locations and/or orientations, for example. In addition, the antenna configuration may be reassessed based on when a threshold level is measured on the antennas.

The invention is not limited to GNSS signals, as the orientation sensing and antenna selection may be used for any wireless signal where maximum received signal may be desired. In another embodiment of the invention, a camera integrated in the wireless device 150 may be utilized to determine orientation, such as by facial recognition, for example, thereby determining the upward direction without the use of a MEMS sensor.

FIG. 1B is a block diagram illustrating exemplary directional GNSS signal reception, in accordance with an embodiment of the invention. Referring to FIG. 1B, there is shown the wireless device 150 and GNSS satellites 120A-120C. The wireless device may be as described with respect to FIG. 1A, and the GNSS satellites may comprise satellite signal sources that may enable location-based services for the wireless device 150.

In operation, the wireless device 150 may comprise one or more antennas that may be enabled to receive GNSS signals. The antennas may be directional antennas in that they may receive maximum signals in particular directions as determined by the geometry and placement of the antennas in the wireless device 150. Accordingly, a plurality of antennas may be integrated in the wireless device 150 to receive a maximum signal in any orientation of the wireless device 150. This may be achieved by switching between each of the plurality of antennas, measuring an RSSI for each antenna, and then enabling the one or more antennas that result in the maximum received signal. The orientation sensor 157 may be utilized to determine the orientation of the wireless device 150, and accordingly which antenna may be oriented in the optimum direction for maximum received GNSS signal. The orbits of the GNSS satellites 120A-120C may be known or otherwise determined, so that the wireless device 150 may know or otherwise determine which antenna may be best at a given orientation at a given time of day, and/or for a particular location.

In another embodiment of the invention, the processor 155 may enable each of the antennas, such as the GNSS antennas 164A-164D, in the wireless device sequentially, and the received signal strength indicator (RSSI) for each antenna may then be utilized to determine the optimum antenna to be enabled. The antennas may be assessed on a cyclical, random, or selected basis, such that the antennas that are not being utilized with a high duty cycle because they resulted in lower RSSI, may be reassessed on a periodic basis, as the orientation of the wireless device 150 with respect to the GNSS signal source may change over time.

The invention is not limited to GNSS signals. Accordingly, the wireless device 150 may enable selected ones of a plurality of antennas for any wireless signal that the wireless device 150 may be enabled to receive and/or transmit.

In another exemplary embodiment of the invention, the assessment of optimum antenna configuration may be configured based on the location of the wireless device 150. Accordingly, in instances where the location of the wireless device 150 is known, such as via a GNSS signal or triangulation, a reduced assessment time may be utilized based on the known location of signal sources, downloaded from a database, for example. In addition, the known location of the wireless device, and thus known signal source constellation, and the measured optimum antenna configuration may be utilized to determine the orientation of the wireless device 150 in instances where there is no orientation sensor.

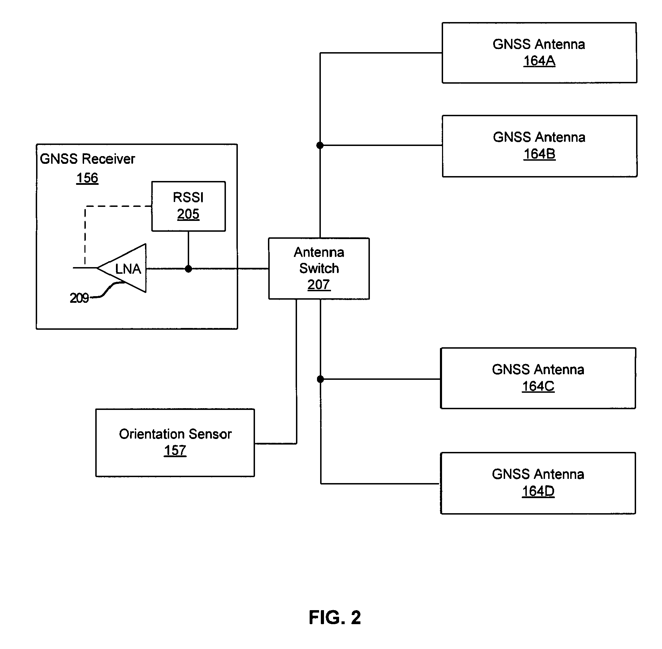

FIG. 2 is a diagram showing a top view of an exemplary multiple-antenna configuration assessment, in accordance with an embodiment of the invention. Referring to FIG. 2, there is shown the GNSS antennas 164A-164D, the GNSS receiver 156, the orientation sensor 157, and the antenna switch 207. The GNSS receiver may be as described with respect to FIG. 1A and may comprise a received signals strength indication (RSSI) module 205 and a low noise amplifier (LNA) 209.

The RSSI module 205 may comprise suitable circuitry, logic, interfaces, and/or code that may be enabled to measure the strength of a received signal. The RSSI module 205 may comprise one or more envelope detectors, for example, that may be enabled to measure the strength of a received signal based on the envelope of the modulated signal. The RSSI module 205 may be operable to measure RSSI before and/or after the LNA 209.

The LNA 209 may comprise suitable circuitry, logic, interfaces, and/or code that may be enabled to amplify signals received from the GNSS antennas 164A-164D via the antenna switch 207. The output of the LNA 209 may be communicatively coupled to other circuitry in the GNSS receiver 156 for processing of the received signals, enabling location-based services for the wireless device 150.

The antenna switch 207 may comprise suitable circuitry, logic, interfaces, and/or code that may be operable to couple one or more of the GNSS antennas 164A-164D to the LNA 209. The antenna switch 207 may be controlled by a processor, such as the processor 150, which may also be operable to receive signals from the orientation sensor 157. In another embodiment of the invention, the antenna switch 207 may also be controlled by input signals from the orientation sensor 157, so that certain antennas with known or determined maximum RSSI from particular orientations may be automatically enabled based on the orientation of the wireless device 150 with respect to received GNSS signals.

In operation, the GNSS antennas 164A-164D may be directional antennas in that they may receive maximum signals in particular directions as determined by the geometry and placement of the antennas in the wireless device 150. The antenna switch 207 may be utilized to switch between each of the GNSS antennas 164A-164D, measuring an RSSI for each antenna via the RSSI module 205, and then enabling the one or more antennas that result in the maximum received signal. The orientation sensor 157 may be utilized to determine the orientation of the wireless device 150, and accordingly which antenna may be oriented in the optimum direction for maximum received GNSS signal.

In another embodiment of the invention, a processor, such as the processor 155 may enable each of the GNSS antennas 164A-164D in the wireless device 150 via the antenna switch 207 sequentially, and the received signal strength indicator (RSSI) for each antenna may then be utilized to determine the optimum antenna to be enabled. The antennas may be assessed on a cyclical basis, such that the antennas that are not being utilized with a high duty cycle because they resulted in lower RSSI, may be reassessed on a periodic basis, since the orientation of the wireless device 150 with respect to the GNSS signal source may have changed over time.

The invention is not limited to GNSS signals. Accordingly, the wireless device 150 may enable selected antennas of the GNSS antennas 164A-164D for any wireless signal that the wireless device 150 may be enabled to receive and/or transmit. Similarly, the invention is not limited to the number of antennas shown in FIG. 2. Accordingly, any number of antennas may be integrated in the wireless device 150 depending on space and cost limitations, for example.

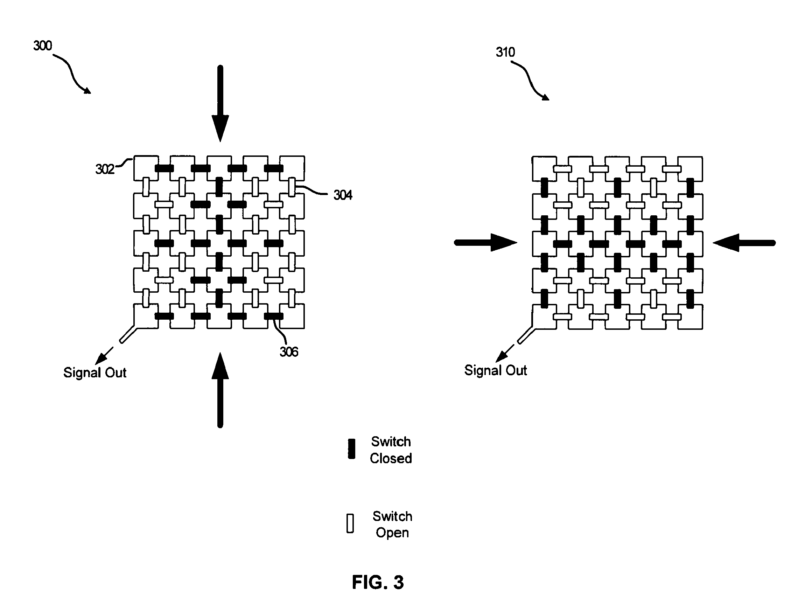

FIG. 3 is a diagram illustrating exemplary directional patch antennas, in accordance with an embodiment of the invention. Referring to FIG. 3, there is shown patch antennas 300 and 310 comprising an array of pixel patches, such as the pixel patch 302, and switches, such as the switch 304. The number of pixel patches or switches per antenna is not limited by the number illustrated in FIG. 3. The active area of the tunable antennas 300 and 310 may be adjusted by activating appropriate switches, as indicated by the switches which have been blackened, or closed, such as the switch 306, and open switches which are shown in FIG. 3 as white rectangles, such as the switch 304. In an embodiment of the invention, the patch antennas 300 and 310 may be integrated on or within the chip 162, or may be integrated on a package 167, both described with respect to FIG. 1A.

In operation, the direction of transmission for the patch antennas 300 and 310 may be defined by the active patches, as indicated in FIG. 3 by closed switches, such as the switch 306. The active area may define a received radiation pattern with a maximum signal received in a desired direction as indicated by the large arrows from the top and bottom of patch antenna 300 and the sides of patch antenna 310, for example. The received signal patterns may be defined by a large variety of activated patch configurations and is not limited to those shown in FIG. 3. In an embodiment of the invention, the enabled portion of the patch antennas 300 and 310 may be configured for a desired direction of reception. The patch antennas 300 and 310 may be communicatively coupled to a receiver, such as the GNSS receiver 156, and may be selectively enabled and configured to receive signals from a particular direction depending on the orientation of the wireless device 150.

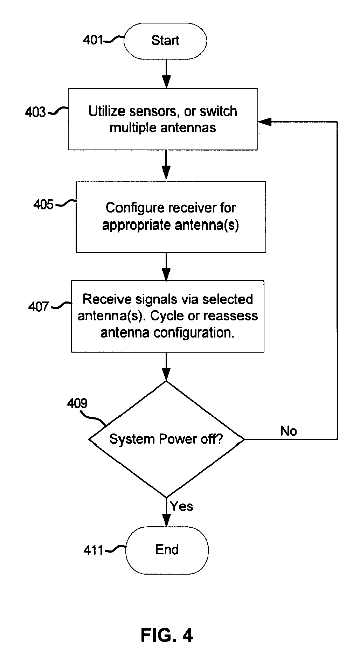

FIG. 4 is a block diagram illustrating exemplary steps for orientation-based antenna configuration, in accordance with an embodiment of the invention. Referring to FIG. 4, in step 403 after start step 401, a MEMS sensor may be utilized to determine an optimum antenna configuration, or the plurality of antennas may be assessed for optimum received signal sequentially, for the particular orientation of the wireless device 150 with respect to a wireless source. In step 405, the antenna configuration that resulted in an optimum received signal may be enabled by the antenna switch 207, followed by step 407, where signals may be received by the selected antenna configuration. The configuration may cycled with other configurations or the optimum configuration may be reassessed on a periodic basis. If, in step 409, the wireless device 150 is to be powered down, the exemplary steps may proceed to end step 411, but if not, the exemplary steps may return to step 403.

In an embodiment of the invention, a method and system are disclosed for antenna diversity with GNSS. In this regard, a wireless device comprising one or more transmitters, one or more receivers, and a plurality of antennas 164A-164D, may selectively couple one or more of the plurality of antennas 164A-164D to the one or more receivers based on a known or determined directionality of each of the plurality of antennas 164A-164D and an orientation of the directionality with respect to sources of the received wireless signals. The wireless signals may comprise GNSS signals. The orientation of the directionality may be determined utilizing one or more orientation sensors 157 integrated in the wireless device 150. The orientation sensor 157 may comprise a MEMS sensor and/or a magnetic compass. One or more of the plurality of antennas 164A-164D may be selectively coupled to the one or more receivers 156 based on a location of the wireless sources and the orientation of the directionality with respect to sources of the received wireless signals. An RSSI may be measured for each selectively coupled configuration of the one or more of the plurality of antennas 164A-164D. One or more of the plurality of antennas 164A-164D may be coupled sequentially to the one or more receivers 156 to determine a maximum of the RSSI. The plurality of antennas 164A-164D may comprise patch antennas 300/310 and/or dipole antennas.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for antenna diversity with GNSS.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for enabling wireless communication, the method comprising:
performing by one or more processors and/or circuits in a wireless communication device, said one or more processors and/or circuits comprising one or more receivers:
selectively coupling one or more of a plurality of antennas in said wireless communication device to said one or more receivers based on a directionality of each of said plurality of antennas and an orientation of each of said plurality of antennas with respect to one or more sources of said received wireless signals.

2. The method according to claim 1, wherein said wireless signals comprise global navigation satellite system (GNSS) signals.

3. The method according to claim 2, comprising determining said orientation utilizing one or more orientation sensors integrated in said wireless device.

4. The method according to claim 3, wherein said one or more orientation sensors comprise a MEMS sensor.

5. The method according to claim 3, wherein said one or more orientation sensors comprise an electromagnetic or magnetic sensor.

6. The method according to claim 1, comprising selectively coupling said one or more of said plurality of antennas to said one or more receivers based on a location of said wireless sources and said orientation with respect to said one or more sources of said received wireless signals.

7. The method according to claim 1, comprising measuring an RSSI for each selectively coupled configuration of said one or more of said plurality of antennas.

8. The method according to claim 7, comprising selectively coupling said one or more of said plurality of antennas sequentially to said one or more receivers to determine which of said selectively coupled one or more of said plurality of antennas provides a maximum RSSI.

9. The method according to claim 1, wherein said one or more of said plurality of antennas comprise patch antennas.

10. The method according to claim 1, wherein said one or more of said plurality of antennas comprise dipole antennas.

11. The method according to claim 1, comprising reducing a number of assessed selectively coupled antenna configurations utilizing a known location of said wireless device and a constellation of signal sources determined based on said location.

12. The method according to claim 11, comprising determining an orientation of said wireless device utilizing said known location and measuring signal strengths from said determined constellation of signal sources.

13. A system for enabling wireless communication, the system comprising:
one or more processors and/or circuits for use in a wireless communication device, wherein said one or more processors and/or circuits comprise one or more receivers, and said one or more processors and/or circuits are operable to:
selectively couple one or more of a plurality of antennas in said wireless communication device to said one or more receivers based on a directionality of each of said plurality of antennas and an orientation each of said plurality of antennas with respect to one or more sources of said received wireless signals.

14. The system according to claim 13, wherein said wireless signals comprise global navigation satellite system (GNSS) signals.

15. The system according to claim 14, wherein said one or more circuits in said wireless device are operable to determine said orientation utilizing one or more orientation sensors integrated in said wireless device.
